# FASCICULE DE BREVET EUROPEEN

(11) **EP 0 614 002 B1**
(45) Date de publication et mention de la délivrance du brevet: **14.08.1996**
(21) Numéro de dépôt: 94400366.4
(22) Date de dépôt: 21.02.1994
(51) Int. Cl.: F02D 19/12, F02M 25/14

(54) **Procédé et dispositif d'injection automatique d'un additif dans le réservoir de carburant d'un véhicule automobile**
Verfahren und Vorrichtung zur automatischen Einspritzung eines Additivs in den Brennstofftank eines Fahrzeuges
Method and device for automatic injection of an additive into the fuel tank of a vehicle

(30) Priorité: 23.02.1993 FR 9302046
(43) Date de publication de la demande: 07.09.1994
(73) Titulaire: RHONE-POULENC CHIMIE, 92408 Courbevoie Cédex (FR)
(72) Inventeur: Lemaire, Jacques, F-95520 Osny (FR); Renauld, Guy, F-95170 Deuil La Barre (FR); Petta, Denis, F-93600 Aulnay-Sous-Bois (FR)
(74) Mandataire: Jaunez, Xavier

(56) Documents cités:
- DE-C- 3 626 419
- FR-A- 1 212 597
- FR-A- 2 668 203
- US-A- 2 623 638
- US-A- 4 568 248
- US-A- 4 621 593
- AUTOMOTIVE ENGINEERING no. 8, 1 Aoüt 1985, WARRENDALE US pages 70 - 78 'Fuel additives influence particulate trap regeneration'

## Description

La présente invention, qui résulte d'une étude menée conjointement par la Société BOUETARD FRERES pour le compte de la Société RHÔNE-POULENC et par cette dernière, concerne l'injection automatique d'additifs dans le réservoir de carburant des véhicules automobiles.

L'injection d'additifs est tout particulièrement intéressante dans le cas des moteurs Diesel, et l'on peut envisager des additifs destinés à réduire la formation de suies lors de la combustion du gazole et/ou à abaisser la température d'auto-inflammation des suies, ou plus généralement des additifs destinés à lubrifier le combustible liquide, ou encore divers composés organo-métalliques.

L'injection d'additifs à été depuis longtemps mise en oeuvre par les usines pétrolières, lorsque le carburant est encore stocké dans une cuve de stockage, de façon que l'additif soit ipso facto intégré au carburant lorsqu'il est délivré aux stations distributrices.

Il s'agit alors d'une technique ne requérant pas une précision élevée dans le dosage, car on raisonne sur des volumes énormes.

Depuis quelques années, les constructeurs automobiles cherchent à développer des techniques d'injection automatique d'additifs dans le réservoir de carburant d'un véhicule automobile, à partir d'un réservoir d'additif embarqué.

Dans ce cas, le procédé d'injection doit être aussi précis que possible pour avoir une concentration maintenue à la valeur désirée, et le dispositif associé doit être à la fois souple, compact , et robuste. Le mélange additif-carburant doit en outre être aussi homogène que possible.

Une technique intéressante est illustrée dans le document US-A-4 621 593.

Dans ce document, on utilise une pompe à solénoïde noyé pour prélever de l'additif dans le réservoir d'additif, en aval de laquelle est prévue une canalisation arrivant en partie haute du réservoir de carburant. Lors d'un réapprovisionnement en carburant, la variation correspondante de niveau est détectée par un flotteur monté en bout d'un bras pivotant, dont l'articulation porte un système à résistance variable, ce qui permet à un calculateur embarqué d'en déduire la quantité d'additif qu'il est nécessaire de prélever, et de commander en conséquence la pompe à solénoïde noyé.

L'injection s'effectue ainsi à basse pression (de l'ordre de 5.10⁵ Pa), et l'additif est déversé sur la surface du carburant, en sortant directement de la canalisation associée. De ce fait, le mélange n'est jamais véritablement homogène : l'additif injecté présente en général une densité différente de celle du carburant, de sorte que cet additif a tendance à rester sous forme de nappe (en partie haute ou en partie basse du réservoir), de sorte que le carburant pompé en partie basse du réservoir par la pompe d'injection du moteur ne présente pas avec certitude la concentration désirée. De plus, le calculateur n'est pas prévu pour permettre une quelconque intervention ultérieure : la concentration est déterminée une fois pour toutes, ce qui confère une certaine rigidité lorsque l'on souhaite notamment utiliser le même système avec d'autres additifs.

Le document DE-C-3 626 419 illustre un système analogue au précédent, mais décrit de façon plus sommaire. Là encore, l'additif est injecté en étant déversé en partie haute du réservoir de carburant, par une tubulure coudée dont l'autre extrémité débouche directement dans la tubulure du bouchon. De ce fait, la précision et l'homogénéité du mélange sont nécessairement limitées.

On a également proposé, pour améliorer la précision du dosage obtenu avec des systèmes classiques à pompe, d'utiliser une seringue de prélèvement dont le piston est directement couplé à un bras à flotteur associé au niveau de carburant dans le réservoir. Une telle technique est en réalité très délicate à mettre en oeuvre. De plus, on retrouve les inconvénients précités concernant le faible degré d'homogénéité du mélange, et la rigidité du système au regard de la concentration de ce mélange.

Les techniques précitées mettent en oeuvre une injection d'additif lorsque le véhicule est à l'arrêt, contact coupé, ce qui est en général préférable pour des raisons de sécurité. De plus, le conducteur peut alors facilement vérifier le bon déroulement de l'injection, et éventuellement être alerté à temps en cas de difficulté (niveau d'additif insuffisant par exemple).

On a également proposé des techniques d'injection intervenant lorsque le véhicule est en marche.

Dans un cas, on a recherché une injection automatique d'additif effectuée en fonction de la variation de niveau consécutive à un réapprovisionnement (comme illustré dans le document FR-A-2 668 203), alors que dans d'autres cas, on a recherché une injection d'additif effectuée en fonction de la consommation de carburant dans le moteur (comme illustré dans le document EP-A-0 269 228).

La technique illustrée dans le document FR-A-2 668 203 prévoit que l'injection d'additif est réalisée par l'intermédiaire d'une conduite reliant le réservoir à la partie de refoulement de la pompe d'injection du carburant. L'injecteur ainsi branché sur la conduite de retour de la pompe d'injection du carburant réalise une injection à pression constante pendant un temps calculé, par la commande correspondante d'une pompe rotative associée. Un limiteur de pression assure ainsi la constance du débit d'additif.La précision du dosage est donc nécessairement limitée, même si les temps de fonctionnement de la pompe sont calculés avec précision.

En outre, une telle injection réalisée dans la conduite de retour ne facilite pas l'obtention d'un dosage précis, et suppose donc impérativement que le véhicule soit en marche, afin que la pompe d'injection refoule la quantité d'additif injectée, qui autrement s'écoulerait lentement dans cette conduite. Il est indiqué dans ce document que le fonctionnement de la pompe d'injection du carburant procure un effet de brassage propice à l'obtention d'un mélange plus homogène, cependant cet effet est nécessairement limité dans la mesure où l'injection d'additif est réalisée sous des pressions faibles (n'excédant en général pas 7.10⁵ Pa). De plus, cette technique reste encore rigide au regard de la proportion choisie pour l'additif, le dosage étant essentiellement figé.

La technique illustrée dans le document EP-A-0 269 228 est quant à elle très complexe à mettre en oeuvre, et le dispositif est encombrant. Il n'est cependant pas absolument nécessaire de rechercher une injection d'additif "en temps réél", en fonction de la consommation de carburant dans le moteur.

L'invention a pour but de concevoir un procédé et un dispositif d'injection automatique d'additif qui ne présentent pas les inconvénients et/ou limitations des techniques précitées.

L'invention a ainsi pour objet de réaliser un procédé et un dispositif d'injection automatique d'additif qui permette un dosage précis, réglable à volonté, ainsi qu'un mélange d'homogénéisation optimale, même lorsque l'additif et le carburant concernés sont difficilement miscibles entre eux, et ce avec une réalisation structurelle à la fois compacte et robuste.

L'invention a également pour objet de réaliser un procédé et un dispositif d'injection automatique d'additif qui soit utilisables pour des véhicules qui n'étaient pas initialement prévus à cet effet, notamment sans nécessité d'opérer des transformations et/ou usinages sur le réservoir du véhicule.

Il s'agit plus particulièrement d'un procédé d'injection automatique d'un additif dans le réservoir de carburant d'un véhicule automobile, partir d'un réservoir d'additif embarqué, selon la revendication 1.

La pulvérisation pulsatoire, qui se démarque radicalement des injections à basse pression jusque là utilisées, permet de générer un brassage énergique du mélange additif-carburant, et ce même lorsque le véhicule est à l'arrêt.

De préférence, la consigne de proportion est réglable par programmation d'une console prévue à cet effet dans l'unité de calcul embarquée et/ou par intervention directe sur cette unité de calcul.

Avantageusement encore, la pulvérisation pulsatoire de l'additif est réalisée par la commande d'une pompe volumétrique à piston qui est intercalée entre le réservoir d'additif et le réservoir de carburant, avec un nombre de coups de piston qui est déterminé automatiquement en fonction de la quantité d'additif à prélever.

Il est par ailleurs intéresant de prévoir qu'on détecte l'apparition d'un niveau minimal de l'additif contenu dans le réservoir d'additif, lequel niveau minimal est déterminé de telle façon qu'il soit encore possible de prélever une quantité d'additif correspondant à un plein du réservoir de carburant, et qu'on déclenche une alarme lumineuse et/ou sonore lorsqu'un tel niveau minimal est détecté.

L'invention a également pour objet un dispositif d'injection automatique d'un additif dans le réservoir de carburant d'un véhicule automobile, à partir d'un réservoir d'additif embarqué, selon la revendication 5.

De préférence, la pompe volumétrique alternative est une pompe à piston, et l'unité de calcul embarquée détermine automatiquement le nombre de coups de piston en fonction de la quantité d'additif à prélever. Avantageusement alors, la pompe volumétrique à piston est montée directement en-dessous du réservoir d'additif, ce qui permet d'avoir une auto-lubrification supprimant toute nécessité d'avoir une pompe de gavage, ainsi qu'un auto-amorçage de la pompe volumétrique qui est donc en charge.

Il est par ailleurs intéressant que la canalisation pénètre dans le réservoir de carburant par l'ouverture associée au bouchon de remplissage de ce réservoir, en traversant un manchon formant rehausse de bouchon , et se prolonge par une portion immergée en extrémité de laquelle est monté l'organe de pulvérisation. En particulier, la canalisation est rigidement solidaire de la rehausse de bouchon, par exemple en étant soudée à celle-ci, ladite rehausse portant en outre, du côté extérieur, un organe de contact avec lequel coopère le bouchon du réservoir monté en partie supérieure de celle-ci, ledit organe de contact étant relié à l'unité de calcul pour transmettre une information relative à l'ouverture et à la refermeture dudit bouchon.

Avantageusement encore, l'unité de calcul est programmable et/ou comporte un bloc de consigne, de façon à pouvoir régler la consigne de proportion de la quantité d'additif à prélever dans le réservoir d'additif. Il est en outre intéressant de prévoir que l'unité de calcul soit alimentée par la batterie du véhicule, et que l'organe de contact associé au bouchon du réservoir soit monté de façon à être sous tension lorsque le contact du véhicule est coupé.

D'autres caractéristiques et avantages de l'invention ressortiront plus clairement à la lumière de la description qui va suivre et des dessins annexés, concernant un mode de réalisation particulier, en référence aux figures ou :
- la figure 1 est une vue en élévation d'un dispositif d'injection d'additif conforme à l'invention, avec son unité de calcul embarquée, et sa pompe volumétrique à piston, ainsi que la canalisation de sortie associée qui va vers le réservoir, et la figure 2 est une vue de dessus de ce dispositif ;
- la figure 3 illustre la pulvérisation d'additif dans le réservoir de carburant, directement dans la masse liquide, lequel réservoir est ici équipé d'un capteur de niveau à flotteur ;
- la figure 4 est une coupe illustrant la pompe volumétrique à piston précitée, qui vient se monter sous le réservoir d'additif ;
- la figure 5 est un schéma de fonctionnement associé à l'unité de calcul embarquée ;
- la figure 6, qui est à rapprocher de la figure 1, illustre une variante dans laquelle le réservoir d'additif est amovible.

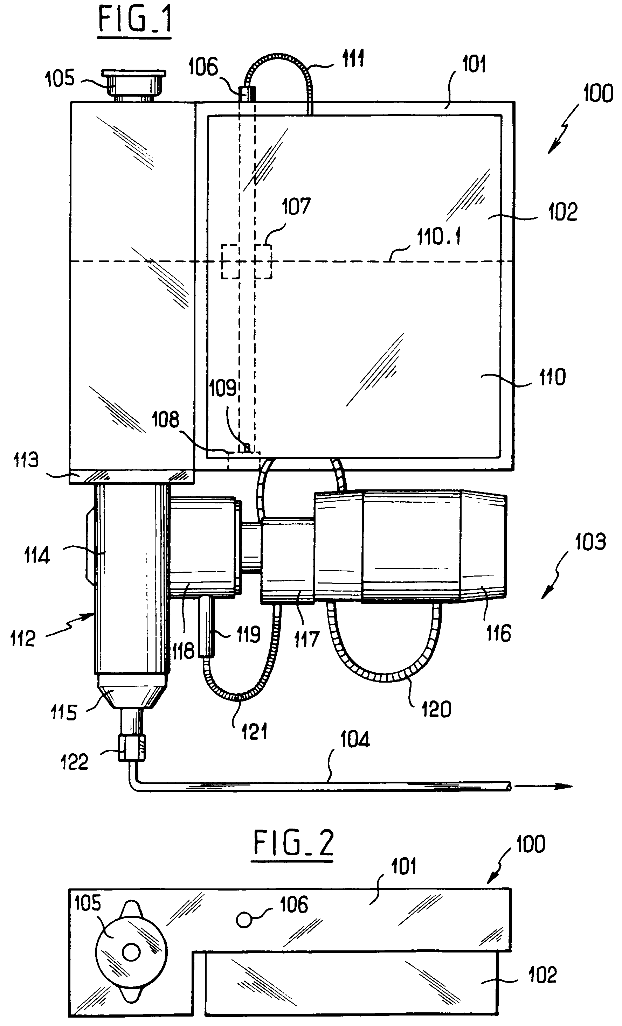

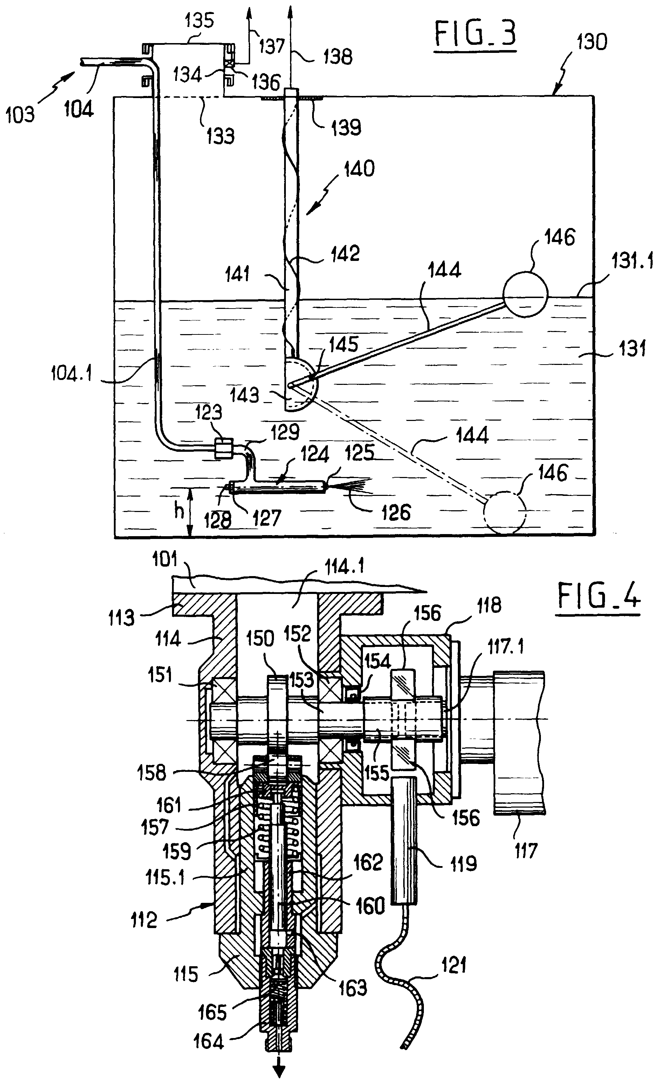

La figure 1 illustre en partie un dispositif 100 d'injection automatique d'un additif dans le réservoir de carburant d'un véhicule automobile, à partir d'un réservoir d'additif embarqué. Sur la figure 1, on distingue un réservoir d'additif embarqué 101, contre lequel est monté un coffret 102 renfermant une unité de calcul embarquée, avec en outre un circuit d'injection d'additif 103 reliant le réservoir d'additif 101 au réservoir de carburant du véhicule, l'autre partie du circuit d'injection d'additif 103 étant représentée sur la figure 3 où l'on distingue le réservoir de carburant 130 dans lequel est agencé un organe de pulvérisation 124 constituant l'extrémité de ce circuit d'injection d'additif 103. Le réservoir d'additif 101 présente, en partie supérieure, un bouchon de remplissage 105 de type conventionnel, et ce réservoir est équipé d'un détecteur de niveau 106 relié par un câble 111 à l'unité de calcul 102. En l'espèce, le détecteur de niveau 106 est du type comportant une tige fixe s'étendant verticalement à l'intérieur du réservoir 101, jusqu'à une butée 108, tige sur laquelle coulisse librement un flotteur 107, qui est par exemple constitué par un corps creux renfermant un aimant destiné à coopérer avec un contact magnétique associé 109 (ménagé en partie basse de la tige fixe) correspondant à un niveau minimal de l'additif contenu dans le réservoir 101. Sur la figure 1, le réservoir 101 est représenté à moitié rempli d'additif 110, le niveau correspondant étant référencé 110.1. Il convient de noter que la présence de la butée 108 permet de détecter l'apparition d'un niveau minimal d'additif qui est déterminé de telle façon qu'il soit encore possible de prélever une quantité d'additif correspondant à un plein du réservoir de carburant 130, l'apparition d'un tel niveau minimal pouvant déclencher une alarme lumineuse et/ou sonore lorsque ce niveau minimal est détecté par intervention du contact magnétique associé 109. Ce volume minimal d'additif sera naturellement fonction du type d'additif injecté, et aussi du type de véhicule automobile concerné. A titre indicatif, le volume minimal pourra être de l'ordre d'un litre. Ainsi que cela est représenté en figure 2, le réservoir 101 est ici conformé avec un renfoncement frontal permettant de loger le coffret 102 associé à l'unité de calcul, de sorte que l'ensemble peut être réalisé de façon particulièrement compacte. A titre indicatif, l'ensemble représenté en vue de dessus en figure 2 pourra être réalisé avec un encombrement de l'ordre de 100mm X 350mm.

On va maintenant décrire les moyens de pompage qui sont prévus pour prélever une quantité d'additif prédéterminée dans le réservoir d'additif 101, ces moyens étant conçus pour permettre une injection par pulvérisation pulsatoire d'une quantité d'additif déterminée directement dans la masse liquide du carburant se trouvant dans le réservoir de carburant 130.

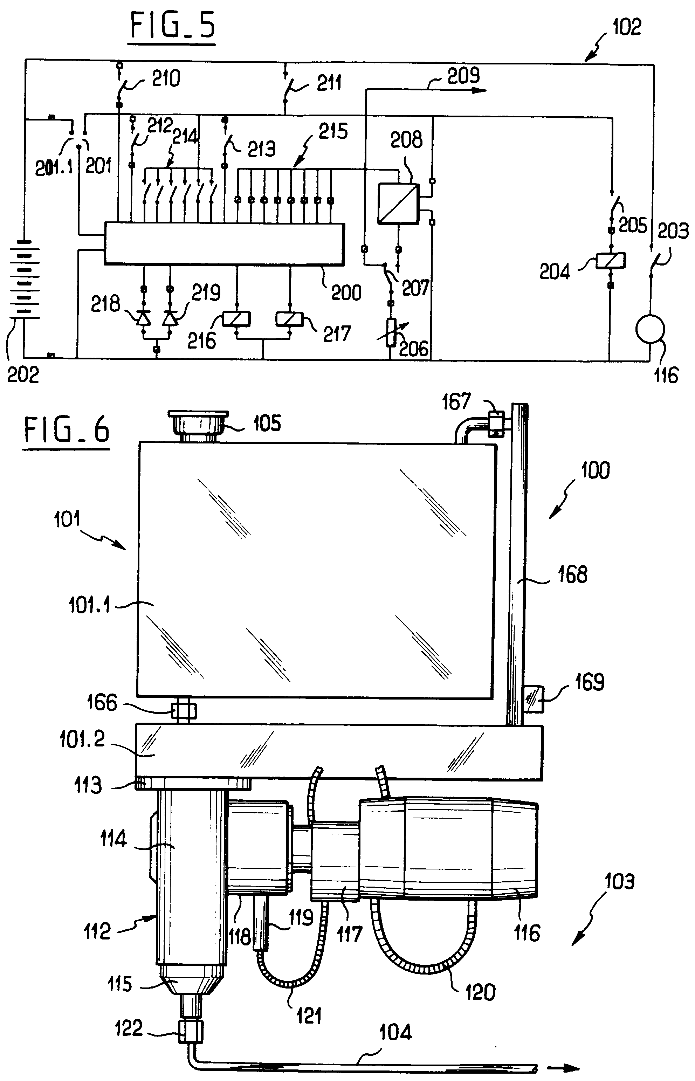

On distingue ainsi sur la figure 1 un ensemble de pompe 112 constituant une pompe volumétrique alternative, avec un corps de pompe 114 qui est ici monté par une bride de fixation 113 sous le réservoir d'additif 101. Un tel montage de la pompe volumétrique alternative est intéressant dans la mesure où l'additif passant dans la pompe assure en même temps la lubrification des éléments mobiles de cette pompe. De plus, cette disposition procure un auto-amorçage de la pompe volumétrique qui est ainsi en charge, avec par suite une précision du dosage encore meilleure. La partie inférieure de la pompe 115 est directement reliée à une canalisation 104 par un raccord associé 122. On distingue également sur la figure 1 les moyens d'entraînement associés à la pompe volumétrique alternative 112. On distingue ainsi un moteur électrique 116, un réducteur associé 117, et un ensemble 118 de liaison mécanique d'accouplement entre la pompe 112 et le groupe moto-réducteur 116, 117, lequel ensemble est en général dénommé "lanterne" par les spécialistes du domaine. Le moteur 116 est relié par un câble 120 à l'unité de commande associée 102, et l'on distingue en outre un organe 119, relié par un câble associé 121 à l'unité de commande, qui est prévu pour contrôler le volume d'additif délivré par la pompe volumétrique alternative 112 à chaque alternance de celle-ci. Il s'agira de préférence d'un organe compte-tours dont le fonctionnement sera décrit plus loin de manière détaillée en se référant à la figure 4. L'unité de calcul embarquée 102, dont l'agencement sera mieux compris en se référant à la figure 5, sert à déterminer la quantité d'additif à prelever dans le réservoir d'additif 101, et commande l'actionnement de la pompe volumétrique alternative 112 en fonction de cette quantité d'additif déterminée. Ainsi qu'on le verra, et conformément à une caractéristique de l'invention, la quantité d'additif à prélever dans le réservoir d'additif 101 est déterminée en fonction d'une part de la variation de niveau du carburant dans le réservoir de carburant 130 consécutive à un réapprovisionnement, et d'autre part d'une consigne de proportion prédéterminée.

On va maintenant se référer à la figure 3 pour décrire l'autre extrémité du circuit d'injection d'additif 103, la canalisation 104 précitée, qui vient de la sortie de la pompe volumétrique alternative 112, pénétrant à l'intérieur du réservoir de carburant 130.

En l'espèce, la canalisation 104 pénétre dans le réservoir de carburant 130 par l'ouverture 133 associée au bouchon de remplissage de ce réservoir, ce qui évite d'avoir à effectuer une quelconque transformation sur le corps du réservoir 130. On aurait pu imaginer un passage de la canalisation 104 à travers le bouchon du réservoir, mais un tel montage serait mal commode dans la pratique, et risquerait d'induire des déplacements indésirables de la canalisation 104 dont l'extrémité immergée supporte l'organe de pulvérisation 124. Pour éviter cet inconvénient, on a prévu ici un manchon 134 formant rehausse de bouchon, lequel manchon présente en partie inférieure un système de verrouillage identique à celui qui est normalement prévu sur le bouchon du réservoir, et en partie supérieure un système de verrouillage identique à celui qui est normalement prévu sur l'embout du réservoir, pour permettre le montage d'un bouchon traditionnel 135. Le manchon 134 est ainsi monté sur l'embout 132 réservoir de carburant 130, et ce manchon est fermé par un bouchon traditionnel 135. La canalisation 104 traverse alors le manchon 134, en étant de préférence rigidement solidaire de celui-ci, par exemple par soudure. Il convient d'observer qu'un tel agencement supprime toute opération à effectuer sur un réservoir de carburant non prévu au départ pour être associé à un dispositif d'injection d'additif : il devient donc aisé d'équiper les véhicules existants avec un dispositif conforme à l'invention, puisqu'il suffit de rentrer dans le réservoir de carburant la portion de canalisation supportant l'organe de pulvérisation, et de fixer l'ensemble par simple mise en place du manchon formant rehausse. La canalisation 104 se prolonge ensuite par une portion immergée 104.1, jusqu'à un raccord 123 par lequel est fixé l'organe de pulvérisation 124.

Il est important de noter que l'organe de pulvérisation 124, agencé pour réaliser une injection par pulvérisation pulsatoire de l'additif, exige une arrivée d'additif à pression élevée, ce qui est obtenu grâce à l'utilisation d'une pompe volumétrique alternative permettant de travailler à des pressions dépassant largement 20 X 10⁵ Pa. Une telle pulvérisation pulsatoire, effectuée directement dans la masse liquide du carburant, réalise, à chaque alternance, un brassage énergique du liquide, comme si on utilisait des organes mécaniques de brassage immergés dans le carburant. Grâce à cet effet de brassage, on parvient à obtenir une homogénéisation intime du mélange additif-carburant, et ce même dans le cas où les deux liquides concernés sont difficilement miscibles entre eux.

En l'espèce, on a illustré un organe de pulvérisation 124 dont la structure permet un réglage de la pulvérisation effectuée. En effet, le support de l'organe de pulvérisation 124 est assuré par un raccord latéral 129, de façon à dégager l'extrémité arrière du corps de cet organe de pulvérisation, extrémité au niveau de laquelle est prévue une vis de réglage 128 permettant de faire varier le tarage du ressort de l'organe de pulvérisation, et un contre-écrou associé 127 verrouillant la position déterminée de cette vis de réglage. Le pulvérisat 126, formé devant la tête 125 de l'organe d'injection 124, doit être dirigé et positionné de façon à ce que son action mécanique de brassage soit optimale. On choisira ainsi avec soin la hauteur h de positionnement de l'organe de pulvérisation 124 au-dessus du fond du réservoir 130, ainsi que l'inclinaison de l'axe de cet organe de pulvérisation 124, l'inclinaison étant ici horizontale. Pour la hauteur h, on choisira dans la pratique un éloignement suffisant du fond pour éviter que le pulvérisat n'atteigne trop rapidement le fond du réservoir, en retenant en général une hauteur moyenne suffisante pour être certain que l'organe de pulvérisation 124 est toujours immergé dans du carburant. Il va de soi que l'on pourra en variante choisir une orientation différente de l'organe de pulvérisation 124, en prévoyant par exemple de disposer l'axe dudit organe selon une direction essentiellement verticale. Pour conserver un maintien correct de l'organe de pulvérisation 124, on utilisera dans la pratique une canalisation 104 rigide, par exemple une tubulure métallique d'environ 8mm de diamètre.

Le réservoir 130, contenant du carburant 131 dont le niveau est référencé 131.1, est en outre équipé, de façon tout à fait classique, d'un moyen de détection du niveau de carburant. En l'espèce, on utilise une sonde de détection 140 fixée par une bride associée 139 au corps du réservoir 130, cette sonde se composant d'une tige verticale 141 en extrémité inférieure de laquelle est prévu un organe 143 supportant un bras articulé 144 à flotteur 146, ledit bras comportant un contact 145 coopérant avec une résistance variable de l'organe d'extrémité 143. La hauteur du niveau du carburant est donnée par l'inclinaison du bras 144, et le signal correspondant est transmis par un fil intérieur 142, entourant la tige 141, et se prolongeant par un fil de sortie 138 qui est raccordé à l'unité centrale de calcul et de commande 102, ainsi que cela sera décrit plus loin en se référant à la figure 5. De cette façon, on utilise le signal donné par une sonde de détection de niveau qui est déjà prévue pour la détermination de la quantité d'additif à prélever dans le réservoir d'additif, ce qui évite d'avoir à prévoir une sonde de niveau particulière rapportée avec le dispositif d'injection d'additif. Ainsi, on peut équiper aisément un véhicule existant, puisque le réservoir de ce véhicule et la sonde de niveau associée peuvent être utilisés tels quels, sans transformation d'adaptation ni équipement interne spécial.

Ainsi, et conformément à l'une des caractéristiques du procédé selon l'invention, la quantité d'additif à prélever peut être déterminée en fonction d'une part de la variation de niveau du carburant dans le réservoir de carburant consécutive à un réapprovisionnement, et d'autre part d'une consigne de proportion prédéterminée.

Il est par ailleurs intéressant de noter sur la figure 3 la présence d'un contact externe 136 monté sur le manchon formant rehausse 134, ce contact étant relié à l'unité centrale de calcul et de commande 102 par un fil de branchement associé 137. Il s'agit d'un contact qui coopère directement avec le bouchon 135, afin de délivrer un premier signal à l'ouverture du bouchon, et un second signal à la refermeture de ce bouchon, ce qui permet d'initialiser le cycle d'injection par pulvérisation pulsatoire de la quantité d'additif déterminée, lorsque le bouchon a été refermé.

Ainsi que cela a été dit plus haut, il est essentiel d'utiliser une pompe volumétrique alternative pour pouvoir injecter l'additif par pulvérisation pulsatoire directement dans la masse liquide du carburant. Dans un mode de réalisation préféré, on utilisera une pompe volumétrique à piston, et la pulvérisation pulsatoire de l'additif sera réalisée par la commande de cette pompe avec un nombre de coups de piston qui est déterminé automatiquement en fonction de la quantité d'additif à prélever. On pourrait en variante utiliser une pompe à membrane, mais la pompe à piston semble la mieux adaptée aux exigences requises.

On va décrire, en se référant à la figure 4, les organes structurels essentiels d'un tel ensemble de pompage.

Le corps de pompe 114 a une forme centrale tubulaire, et il présente intérieurement des roulements 151 et 152 permettant le montage d'une came 150 dont l'axe est essentiellement perpendiculaire à l'axe du corps de pompe. La came 150 dont le profil est déterminé en fonction du cycle de pulvérisation choisi, coopère directement avec un galet 158 qui est monté tournant en partie supérieure d'une chemise porte-galet 157 qui coulisse axialement dans une portion tubulaire 115.1 surmontant la partie inférieure de la pompe 115. Le galet 158 est maintenu en contact avec la came 150 grâce à un ressort associé 159, qui agit également sur une coupelle 161 à laquelle est accouplée l'extrémité supérieure d'un piston 160 en forme de tige, lequel piston coulisse dans une chemise de pompe 162 montée fixe dans la partie 115. Un trou d'aspiration 163 est ménagé en partie basse de cette chemise de pompe 162 pour le passage de l'additif à chaque cycle de pulvérisation, l'additif passant alors dans un embout de sortie 164, à l'intérieur duquel est prévu un clapet de non retour 165 chargé par un ressort taré associé.

L'arbre de la came 150 se prolonge par ailleurs, en direction de l'ensemble d'entraînement de la pompe volumétrique à piston 112, par une portion 153 qui pénétre, en franchissant un joint à lèvres 154, à l'intérieur de la lanterne 118. En face de ce prolongement d'arbre, on trouve l'arbre de sortie 117.1 du réducteur 117, qui pénétre également à l'intérieur de la lanterne 118. Les deux extrémités d'arbre 117.1 et 153 sont disposées à l'intérieur d'un manchon cyclindrique commun 155, et ces deux extrémités sont en outre munies d'une gorge d'extrémité transversale permettant le passage d'une plaquette d'accouplement 156, qui est simple ou double. En l'espèce, on a illustré ici une plaquette unique 156, dont la fonction première est de réaliser l'accouplement direct d'entraînement de la came 150, mais qui assure ici également, par coopération avec le capteur compte-tours 119, une fonction supplémentaire de contrôle du volume d'additif délivré par la pompe volumétrique à piston, grâce à un comptage direct des coups de piston de cette pompe.

Un tel ensemble de pompe est parfaitement adapté pour délivrer une pression élevée de 40 à 50 X 10⁵ Pa, pression qui est favorable à l'obtention d'une pulvérisation pulsatoire capable de générer un effet de brassage efficace. Les essais effectués tendent à montrer que la puissance consommée par le dispositif d'injection est en réalité très faible, par exemple inférieure à 100 watts, ce qui permet d'utiliser des moyens d'entraînement de la pompe dont le dimensionnement est faible (au rendement près, la totalité de l'énergie fournie est utilisée pour la pulvérisation).

L'unité de calcul embarquée 102 est ainsi conçue pour déterminer automatiquement le nombre de coups de pistion en fonction de la quantité d'additif à prelever dans le réservoir d'additif. On va maintenant décrire, en se référant à la figure 5, un schéma de fonctionnement associé à cette unité de calcul embarquée 102.

L'unité de calcul embarquée 102 est ici alimentée par la batterie du véhicule 202, ce qui permet non seulement une autonomie avantageuse, mais aussi un fonctionnement du dispositif d'injection lorsque le véhicule est à l'arrêt, contact coupé. Il va de soi que l'organe de contact associé au bouchon du réservoir sera dans ce cas monté de façon à être sous tension lorsque le contact du véhicule est coupé, car l'information correspondante est utilisée pour initialiser les cycles de pulvérisation pulsatoire d'additif dans la masse liquide du carburant.

L'organe central de l'unité de calcul embarquée 102 est constitué par un calculateur ou mini-automate programmable 200. Un bloc de digitalisation du niveau de carburant 215 est associé au calculateur 200, ce bloc étant relié à un convertisseur digital-analogique 208 qui peut être relié à un contact de jauge du réservoir de carburant 206 lorsque le relais associé 207 est commuté, l'autre position de ce relais correspondant à l'alimentation d'une ligne 209 associée à l'indication habituelle du niveau de carburant à l'aide d'un voyant du tableau de bord du véhicule. On distingue en outre un bloc de consigne 214 associé au calculateur programmable 200, ici schématisé sous la forme d'un bloc à 6 bits, ce qui permet de régler la consigne de proportion par programmation d'une console (non représentée ici) prévue à cet effet dans le coffret de l'unité de calcul embarquée et/ou par intervention directe sur cette unité de calcul. Un tel bloc de consigne constitue un avantage très important, dans la mesure où il devient possible d'adapter les conditions de pulvérisation pulsatoire à chaque cas particulier, notamment à chaque type d'additif utilisé.

Les autres organes de commutation illustrés ici sont de type tout à fait classique, de sorte qu'il suffira de mentionner brièvement leur présence. On distingue ainsi un relais de contact 203 associé au moteur d'entraînement de la pompe 116, la bobine associée, adjacente à un relais 205 étant référencée 204. On distingue également les bobines 216 et 217 des relais 205 et 207, comportant un étage d'amplification permettant d'avoir des courants plus forts en vue d'un pouvoir de coupure suffisant en association avec le calculateur programmable 200. Des diodes électro-luminescentes 218 et 219 sont également prévues, ces diodes étant associées à des voyants (non représentés ici) correspondant au fonctionnement normal ou à la détection d'un défaut. On distingue encore un relais 212 associé au niveau minimal d'additif dans le réservoir d'additif, un relais 213 qui est associé au compte-tours de l'unité de pompage (c'est à dire au comptage des coups de piston de la pompe volumétrique à piston), un relais 210 associé au contact de bouchon (et donc relié à l'organe de contact 136 précité), et un relais d'auto-maintien 211. On a illustré enfin la possibilté d'une double possibilité de connection 201, 201.1 : la connection 201.1 correspond à une alimentation permanente par la batterie 202, ce qui permet d'utiliser un voyant de contrôle, tandis que la connection 201 correspond à une alimentation par les relais 210 et 211, ce qui permet d'éviter toute consommation d'énergie inutile lorque le calculateur programmable 200 n'est pas utilisé.

Lorsque le relais 207 est commuté de façon à relier à jauge 206 au convertisseur 208, l'ouverture et la refermeture subséquentes du bouchon de remplissage du réservoir de carburant sont associées à deux lectures successives du niveau de carburant, et la comparaison des signaux correspondants permet de déterminer, par calcul, le volume d'additif nécessaire pour la proportion choisie. Ainsi que cela a été dit plus haut, la consigne de proportion est de préférence réglable par programmation et/ou par intervention directe sur l'unité de calcul.

On a illustré enfin sur la figure 6 une variante dans laquelle le réservoir d'additif est agencé de façon à être amovible. On distingue en effet un réservoir d'additif 101 comportant une unité principale 101.1, et une unité de réserve 101.2 sous laquelle est monté un ensemble de pompage correspondant à celui qui a été décrit plus haut. L'unité de réserve 101.2, dont la contenance correspond sensiblement au volume d'additif nécessaire pour un plein du réservoir de carburant, est surmontée d'un évent 168 équipé d'un contact de niveau bas 169. L'unité principale du réservoir 101.1 est avantageusement reliée à un ensemble monté à demeure sur le véhicule par deux raccords auto-perforants 166 et 167, ce qui permet d'utiliser des réservoirs d'additif stockés sous forme de "cartouches". Une fois l'unité 101.1 montée en place, tout se passe de la même façon que pour l'unité fixe précedemment décrite. Lorsque l'unité principale 101.1 s'est vidée, le contact niveau bas 169 produit un signal d'alerte, et l'unité de réserve 101.2 permet de s'assurer que l'on peut encore réaliser une pulvérisation pulsatoire d'une quantité d'additif correspondant à un plein du réservoir de carburant.

## Revendications

1. Procédé d'injection automatique d'un additif dans le réservoir de carburant d'un véhicule automobile, à partir d'un réservoir d'additif embarqué,
dans lequel on détermine, à l'aide d'une unité de calcul embarquée (102), la quantité d'additif à prélever dans le réservoir d'additif (101), en fonction d'une part de la variation de niveau du carburant dans le réservoir de carburant (130) consécutive à un réapprovisionnement, et d'autre part d'une consigne de proportion prédéterminée, caractérisé par le fait :
- qu'on injecte par pulvérisation pulsatoire la quantité d'additif ainsi déterminée, cette pulvérisation étant effectuée directement dans la masse liquide du carburant.

2. Procédé selon la revendication 1, caractérisé par le fait que la consigne de proportion est réglable par programmation d'une console prévue à cet effet dans l'unité de calcul embarquée (102) et/ou par intervention directe sur cette unité de calcul.

3. Procédé selon la revendication 1 ou 2, caractérisé par le fait que la pulvérisation pulsatoire de l'additif est réalisée par la commande d'une pompe volumétrique à piston (112) qui est intercalée entre le réservoir d'additif (101) et le réservoir de carburant (130), avec un nombre de coups de piston qui est déterminé automatiquement en fonction de la quantité d'additif à prélever.

4. Procédé selon l'une des revendications 1 à 3, caractérisé par le fait qu'on détecte l'apparition d'un niveau minimal de l'additif contenu dans le réservoir d'additif (101), lequel niveau minimal est déterminé de telle façon qu'il soit encore possible de prélever une quantité d'additif correspondant à un plein du réservoir de carburant (130), et qu'on déclenche une alarme lumineuse et/ou sonore lorsqu'un tel niveau minimal est détecté.

5. Dispositif d'injection automatique d'un additif dans le réservoir de carburant (130) d'un véhicule automobile, à partir d'un réservoir d'additif embarqué (101), comportant
- un circuit d'injection d'additif (103) reliant le réservoir d'additif (101) au réservoir de carburant (130), ledit circuit comprenant une pompe volumétrique alternative (112) agencée pour prélever une quantité d'additif prédéterminée dans le réservoir d'additif (101), et
- une unité de calcul embarquée (102) servant à déterminer la quantité d'additif à prélever dans le réservoir d'additif (101), et commandant l'actionnement de la pompe volumétrique alternative (112) en fonction de la quantité d'additif ainsi déterminée;
caractérisé par le fait qu'il comporte également une canalisation (104) allant de la sortie de la pompe précitée (112) au réservoir de carburant (130), en pénétrant à l'intérieur de celui-ci, et un organe de pulvérisation (124) porté par cette canalisation (104), en extrémité de celle-ci, ledit organe étant positionné pour effectuer une pulvérisation pulsatoire d'additif directement dans la masse liquide du carburant.

6. Dispositif selon la revendication 5, caractérisé par le fait que la pompe volumétrique alternative (112) est une pompe à piston, et l'unité de calcul embarquée (102) détermine automatiquement le nombre de coups de piston en fonction de la quantité d'additif à prélever.

7. Dispositif selon la revendication 6, caractérisé par le fait que la pompe volumétrique à piston (112) est montée directement en-dessous du réservoir d'additif(101).

8. Dispositif selon l'une des revendications 5 à 7, caractérisé par le fait que la canalisation (104) pénètre dans le réservoir de carburant (130) par l'ouverture (133) associée au bouchon de remplissage de ce réservoir, en traversant un manchon (134) formant rehausse de bouchon , et se prolonge par une portion immergée (104.1) en extrémité de laquelle est monté l'organe de pulvérisation (124).

9. Dispositif selon la revendication 8, caractérisé par le fait que la canalisation (104) est rigidement solidaire de la rehausse de bouchon (134), par exemple en étant soudée à celle-ci, ladite rehausse portant en outre, du côté extérieur, un organe de contact (136) avec lequel coopère le bouchon du réservoir (135) monté en partie supérieure de celle-ci, ledit organe de contact étant relié à l'unité de calcul (102) pour transmettre une information relative à l'ouverture et à la refermeture dudit bouchon.

10. Dispositif selon l'une des revendications 5 à 9, caractérisé par le fait que l'unité de calcul (102) est programmable et/ou comporte un bloc de consigne (214), de façon à pouvoir régler la consigne de proportion de la quantité d'additif à prélever dans le réservoir d'additif (101).

11. Dispositif selon les revendications 9 et 10, caractérisé par le fait que l'unité de calcul (102) est alimentée par la batterie du véhicule (202), et l'organe de contact (136) associé au bouchon du réservoir est monté de façon à être sous tension lorsque le contact du véhicule est coupé.

## Patentansprüche

1. Verfahren zur automatischen Einspritzung eines Additivs in den Brennstofftank eines Kraftfahrzeugs, aus einem im Fahrzeug befindlichen Behälter für das Additiv, bei dem man mit Hilfe einer eingebauten Rechnereinheit (102) die dem Additivbehälter (101) zu entnehmende Additivmenge als Funktion einerseits der Änderung des Treibstoffniveaus in dem Treibstoffbehälter (130) als Folge einer weiteren Treibstoffzufuhr und andererseits eines zuvor festgelegten Einstellverhältnisses bestimmt, dadurch gekennzeichnet, daß man durch Pulszerstäubung die so bestimmte Additivmenge einspritzt, wobei die Zerstäubung direkt in die Treibstoffflüssigkeit erfolgt.

2. Verfahren nach Anspruch 1, dadurch gekennzeichnet, daß das Einstellverhältnis durch Programmierung einer Konsole, die zu diesem Zweck in der eingebauten Rechnereinheit (102) vorgesehen ist, und/oder durch direkte Einwirkung auf die Rechnereinheit steuerbar ist.

3. Verfahren nach Anspruch 1 oder 2, dadurch gekennzeichnet, daß die Pulszerstäubung des Additivs durch Steuerung einer Kolbendosierpumpe (112) erfolgt, die zwischen dem Additivbehälter (101) und dem Treibstoffbehälter (130) angeordnet ist, wobei die Hubzahl des Kolbens automatisch als Funktion der zu entnehmenden Additivmenge bestimmt wird.

4. Verfahren nach einem der Ansprüche 1 bis 3, dadurch gekennzeichnet, daß man das Auftreten eines minimalen Niveaus des im Behälter (101) enthaltenen Additivs feststellt, wobei das minimale Niveau so bestimmt wird, daß es noch möglich ist, eine einem vollen Treibstoffbehälter (130) entsprechende Additivmenge zu entnehmen, und daß ein Alarm durch Licht- oder Lautsignal ausgelöst wird, wenn ein solches minimales Niveau festgestellt wird.

5. Vorrichtung zur automatischen Einspritzung eines Additivs in den Treibstoffbehälter (130) eines Kraftfahrzeugs, aus einem im Fahrzeug befindlichen Behälter für das Additiv, enthaltend
• einen Einspritzkreislauf für das Additiv (103), der den Additivbehälter (101) mit dem Treibstoffbehälter (130) verbindet, wobei der Kreislauf eine sich auf- und abbewegende Dosierpumpe (112) enthält, die zur Entnahme einer zuvor bestimmten Additivmenge aus dem Additivbehälter (101) vorgesehen ist; und
• eine eingebaute Rechnereinheit (102), die zur Bestimmung der dem Additivbehälter (101) zu entnehmenden Additivmenge dient und den Antrieb der sich auf- und abbewegenden Dosierpumpe (112) als Funktion der so bestimmten Additivmenge steuert;
dadurch gekennzeichnet, daß sie ebenfalls eine von dem Ausgang der zuvor genannten Pumpe (112) zum Treibstoffbehälter (130) und bis ins Innere des Treibstoffbehälters reichende Leitung (104) und eine am Ende dieser Leitung (104) angeschlossene Zerstäubungsvorrichtung (124) enthält, die so angeordnet ist, daß eine direkte Pulszerstäubung des Additivs in die Treibstoffflüssigkeit erfolgt.

6. Vorrichtung nach Anspruch 5, dadurch gekennzeichnet, daß die sich auf- und abbewegende Dosierpumpe (112) eine Kolbenpumpe ist, und die eingebaute Rechnereinheit (102) automatisch die Zahl der Kolbenhübe in Abhängigkeit von der zu entnehmenden Additivmenge bestimmt.

7. Vorrichtung nach Anspruch 6, dadurch gekennzeichnet, daß die Kolbendosierpumpe (112) direkt unter dem Additivbehältnis (101) angeordnet ist.

8. Vorrichtung nach einem dcr Ansprüche 5 bis 7, dadurch gekennzeichnet, daß die Leitung (104) in den Treibstoffbehälter (130) durch die Öffnung (133) dringt, die mit einem Verschlußdeckel dieses Tanks verbunden ist und die durch eine Muffe (134) hindurchgeht, die den Füllrahmen des Verschlusses bildet, wobei sich die Leitung um ein eingetauchtes Stück (104.1) verlängert, an dessen Ende die Zerstäubungsvorrichtung (124) angeordnet ist.

9. Vorrichtung nach Anspruch 8, dadurch gekennzeichnet, daß die Leitung (104) starr mit dem Füllrahmen des Verschlusses (134), z.B. durch Verschweißen verbunden ist, wobei der Füllrahmen außerdem an seiner Außenseite eine Kontaktvorrichtung (136) aufweist, mit der der oberhalb derselben angebrachte Verschluß des Tanks (135) zusammenwirkt, und die Kontaktvorrichtung mit der Rechnereinheit (102) verbunden ist, um eine Information bezüglich des Öffnens und Wiederverschließens des Verschlusses zu übertragen.

10. Vorrichtung nach einem der Ansprüche 5 bis 9, dadurch gekennzeichnet, daß die Rechnereinheit (102) programmierbar ist und/oder eine Einstellvorrichtung (214) aufweist, um das Einstellverhältnis der dem Additivbehälter (101) zu entnehmenden Additivmenge steuern zu können.

11. Vorrichtung nach den Ansprüchen 9 und 10, dadurch gekennzeichnet, daß die Rechnereinheit (102) durch die Batterie (202) des Krafttfahrzeuges mit Strom versorgt wird und daß die mit dem Tankverschluß verbundene Kontaktvorrichtung so angeordnet ist, daß sie unter Spannung steht, wenn der Kontakt zum Fahrzeug unterbrochen wird.

## Claims

1. Method for automatic injection of an additive into the fuel tank a motor vehicle, from an on-board additive tank, wherein the quantity of additive to be withdrawn from the additive tank (101) is determined using an on-board computation unit (102), as a function, on the one hand, of the variation in level of the fuel in the fuel tank (130) following refuelling, and, on the other hand, of a predetermined proportion set-point, characterized in that the quantity of additive thus determined is injected by pulsed atomization, this atomization being carried out directly into the liquid bulk of the fuel.

2. Method according to claim 1, characterized in that the proportion set-point can be adjusted by programming a console provided for this purpose in the on-board computation unit (102) and/or by direct operation on this computation unit.

3. Method according to claim 1 or 2, characterized in that the pulsed atomization of the additive is carried out by controlling a positive-displacement piston pump (112) which is interposed between the additive tank (101) and the fuel tank (130), with a number of piston strokes which is determined automatically as a function of the quantity of additive to be withdrawn.

4. Method according to one of claims 1 to 3, characterized in that the appearance of a minimum level of the additive contained in the additive tank (101) is detected, which minimum level is determined such that it is still possible to withdraw a quantity of additive corresponding to one fill of the fuel tank (130), and in that a luminous and/or audible alarm is triggered when such a minimum level is detected.

5. Device for automatically injecting an additive into the fuel tank (130) of a motor vehicle, from an on-board additive tank (101), comprising :
- an additive injection circuit (103) connecting the additive tank (101) to the fuel tank (130), the said circuit comprising a reciprocating positive-displacement pump (112) arranged to withdraw a predetermined quantity of additive from the additive tank (101), and
- an on-board computation unit (102) used for determining the quantity of additive to be withdrawn from the additive tank (101), and controlling the actuation of the reciprocating positive-displacement pump (112) as a function of the quantity of additive thus determined;
characterized in that it further comprises a pipe (104) going from the output of the aforementioned pump (112) to the fuel tank (130), and penetrating therein, and an atomization member (124) carried by this pipe (104), at the end of the latter, the said member being positioned in order to carry out pulse atomization of additive directly into the liquid bulk of the fuel.

6. Device according to claim 5, characterized in that the reciprocating positive-displacement pump (112) is a piston pump, and the on-board computation unit (102) automatically determines the number of piston strokes as a function of the quantity of additive to be withdrawn.

7. Device according to claim 6, characterized in that the positive-displacement piston pump (112) is mounted directly below the additive tank (101).

8. Device according to one of claims 5 to 7, characterized in that the pipe (104) penetrates into the fuel tank (130) through the opening (133) associated with the filler cap of this tank, passing through a sleeve (134) forming a filler extension, and is extended by a submerged portion (104.1), at the end of which the atomization member (124) is mounted.

9. Device according to claim 8, characterized in that the pipe (104) is rigidly attached to the filler extension (134), for example being welded thereto, the said extension furthermore carrying, on the outside, a contact member (136) with which the cap of the tank (135) mounted at the top of its extension interacts, the said contact member being connected to the computation unit (102) in order to transmit data relating to the opening and reclosing of the said cap.

10. Device according to one of claims 5 to 9, characterized in that the computation unit (102) is programmable and/or comprises a set-point unit (214), so that the proportion set-point of the quantity of additive to be withdrawn from the additive tank (101) can be adjusted.

11. Device according to claims 9 and 10, characterized in that the computation unit (102) is powered by the battery (202) of the vehicle, and the contact member (136) associated with the cap of the tank is mounted so as to be powered up when the vehicle is turned off.
